# EUROPEAN PATENT SPECIFICATION

(11) **EP 2 888 020 B1**
(45) Date of publication and mention of the grant of the patent: **04.10.2017**
(21) Application number: 13830613.9
(22) Date of filing: 23.08.2013
(51) Int. Cl.: C10G 7/02, C10G 7/06, B01D 3/06, B01D 19/00

(54) **Method of processing a petroleum fraction and a devolatilized liquid product**
Verfahren zur Verarbeitung einer Petroleumfraktion und eines entgasten flüssigen Produkts
Méthode de traitement d'une fraction pétrolière et d'un produit liquide dévolatilisé

(30) Priority: 24.08.2012 US 201261693156 P
(43) Date of publication of application: 01.07.2015
(73) Proprietor: Ensyn Renewables, Inc., Wilmington, DE 19803-3645 (US)
(72) Inventor: HOPKINS, Geoffrey, Ottawa, ON K4P 1N1 (CA); FREEL, Barry, A., Ottawa, Ontario K4P 0A9 (CA); CLARKE, Doug, Richmond, ON K0A 3P0 (CA)
(74) Representative: Holzwarth-Rochford, Andreas
(86) International application number: PCT/US2013/056400
(87) International publication number: WO 2014/031965

(56) References cited:
- WO-A1-02/49735
- US-A- 4 101 414
- US-A- 4 584 064
- US-A1- 2008 282 606
- US-A1- 2009 008 296
- US-A1- 2011 001 012
- US-A1- 2012 205 289
- US-B1- 6 676 828

## Description

The present disclosure relates to U.S. Patent No. 7,572,365; U.S. Patent No. 7,572,362; U.S. Patent No. 7,270,743, U.S. Patent No. 8,105,482, U.S. Patent No. 8,062,503, U.S. Patent No. 7,905,990, U.S. Patent No. 8,097,090, and U.S. Patent No. 5,792,340. U.S. Patent No. 7,572,365; U.S. Patent No. 7,572,362; U.S. Patent No. 7,270,743, U.S. Patent No. 8,105,482, U.S. Patent No. 8,062,503, U.S. Patent No. 7,905,990, U.S. Patent No. 8,097,090, and U.S. Patent No. 5,792,340.

The present disclosure generally relates to the devolatilization of thermally produced liquids to raise the flash point. More specifically, the present disclosure is directed to methods and apparatus to effectively and selectively reduce volatile components of liquids produced from the thermal conversion of biomass and petroleum materials.

Biomass has been a primary source of energy over much of human history. During the late 1800's and 1900's the proportion of the world's energy sourced from biomass dropped, as the commercial development and utilization of fossil fuels occurred, and markets for coal and petroleum products dominated. Nevertheless, some 15% of the world's energy continues to be sourced from biomass, and in developing countries the contribution of biomass is much higher at 38%. In addition, there has been a new awareness of the impact of the utilization of fossil fuels on the environment. In particular, the public is more concerned about and aware of the increase of greenhouse gases resulting from the consumption of fossil fuels.

Biomass, such as wood, wood residues, and agricultural residues, can be converted to useful products, e.g., fuels or chemicals, by thermal or catalytic conversion. An example of thermal conversion is pyrolysis where the biomass is converted to a liquid and char, along with a gaseous co-product by the action of heat in essentially the absence of oxygen. In a generic sense, pyrolysis is the conversion of biomass to a liquid and/or char by the action of heat, typically without involving any direct combustion of the biomass feedstock in the primary conversion unit.

Historically, pyrolysis was a relatively slow process where the resulting liquid product was a viscous tar and "pyroligneous" liquor. Conventional slow pyrolysis has typically taken place at temperatures below 400°C, and over long processing times ranging from several seconds to minutes or even hours with the primary intent to produce mainly charcoal and producing liquids and gases as by-products.

A more modern form of pyrolysis, or rapid thermal conversion, was discovered in the late 1970's when researchers noted that an extremely high yield of a light, pourable liquid was possible from biomass. In fact, liquid yields approaching 80% of the weight of the input of a woody biomass material were possible if conversion was allowed to take place over a very short time period, typically less than 5 seconds.

The homogeneous liquid product from this rapid pyrolysis, which has the appearance of a light to medium petroleum fuel oil, can be considered renewable oil. Renewable oil is suitable as a fuel for clean, controlled combustion in boilers, industrial furnaces, and for use in diesel and stationary turbines. This is in stark contrast to slow pyrolysis, which produces a thick, low quality, two-phase tar-aqueous mixture in very low yields.

In practice, the short residence time pyrolysis of biomass causes the major part of its organic material to be instantaneously transformed into a vapor phase. This vapor phase contains both non-condensable gases (including methane, hydrogen, carbon monoxide, carbon dioxide and olefins) and condensable vapors. It is the condensable vapors that constitute the final liquid product and the yield and value of this material is a strong function of the method and efficiency of the downstream capture and recovery system.

Several methods and systems can be employed to produce rapid or fast pyrolysis liquids, such as fluid transport reactors, bubbling fluid bed reactors, rotating cones, and auger systems to name a few. Given the fact that there is an ever increasing world mandate for green fuel alternatives, the demand for these thermally produced liquids will increase. The properties of these liquids will should be examined and potentially altered for the purpose of achieving appropriate transportation, environmental, handling and commercial applications. One liquid property of prime relevance to liquid transportation and appropriate handling practices is the flash point.

The measure of flash point of a liquid is a common gauge of the flammability and is indicated by the maximum temperature at which a material can be stored and handled. If the flash point is too low it causes the fuel to be subject to flashing and possible ignition. Certain properties of materials are not generally affected by variations in the flash point, such as auto-ignition temperature, fuel injection and combustion performance. In many jurisdictions, there is a significant difference in how materials are treated if the flash point is above or below a certain threshold. This threshold is typically in the range of 55-62°C as measured by the Pensky-Martens closed cup flash point tester (e.g. ASTM D-93).

Liquids produced from the thermal conversion of biomass and other carbonaceous materials are a complex mixture of many different chemical compounds. Each of these compounds has a different flash point, and as such may influence the flammable classification of the product. For example, it is known that fast pyrolysis oils contain acetaldehyde which has a flash point of -39°C. A small concentration of this material, as little as up to 1 wt%, can have a material impact on the flash point result.

If a low flash point is recorded for a sample of pyrolysis liquid, it may not be truly indicative of the combustibility of the whole product. For example, fast pyrolysis oils typically contain 15-30 wt% water which tends to suppress combustibility without specific measures taken to ensure flammability. These measures may include heating, atomization, supply of supporting flame and/or another form of heat source, etc. As such, a low flash point measurement may unjustifiably classify these liquids in regard to flammability since the measurement is only reflecting the flash point of a small portion of the total product.

The ability to selectively remove some or all of the volatile components from thermally converted liquids, including fast pyrolysis oils, can be important to the classification of the product so that it is acceptable for transport and handling in the broadest sense.

WO 02/49735 A1 relates to a pumping apparatus for pumping crude oil comprises a pump means operatively positioned in a crude oil pipe line for pumping oil therethrough, an engine operatively connected to the pump means for driving said pump means, a heater and flash vessel for receiving and heating a portion of the crude oil therefrom arranged to flash/evaporate the majority of the lighter fractions from the portion of the crude oil, to leave a residue of crude oil which has a flash point of greater than about 60°C.

The invention relates to a method of processing a petroleum fraction feedstock and a devolatilized liquid product in a refinery system, according to claim 1. The starting liquid is formed by pyrolysis of a biomass, the method comprising: supplying the starting liquid to a first component; heating the first component to a temperature in the range of 20°C to 200°C; obtaining a processed liquid product, wherein the processed liquid has an increased flash point and a reduced concentration of volatile components as compared to the starting liquid; and obtaining a volatile components product.

Especially a method of increasing the flash point of a starting liquid by devolatilization of the starting liquid, wherein the starting liquid is produced from thermal conversion, the method comprising: supplying the starting liquid to a first component comprising a wiped film evaporator; a falling film evaporator; a packed column; a devolatilization tank; an outlet, wherein the outlet includes a carbon filter system; an outlet, wherein the outlet includes a scrubber; an outlet, wherein the outlet includes a filter system; an agitator, wherein the agitator is configured to improve the rate of devolatilization; a circulation pump, wherein the circulation pump is configured to improve the rate of devolatilization.

A system for thermal conversion can be used, comprising: a feed system; a reactor; and a plurality of condensing chambers, wherein the temperature of the one or more of the plurality of condensing chambers is adjusted to a temperature greater than 30°C, such as a temperature in the range of 30 to 50 °C, 30 to 60 °C, or 40 to 75 °C.

Particularly introducing a devolatilized, processed liquid material into at least a second system or apparatus for further processing, such as a refinery system; a fluidized catalytic cracker (FCC); an FCC refinery system; a coker; a coking unit; a field upgrader unit; a hydrotreater; a hydrotreatment unit; a hydrocracker; a hydrocracking unit; or a desulfurization unit is proposed. In certain embodiments, the invention relates to introducing a devolatilized, processed liquid material via injecting, feeding, or co-feeding, the devolatilized liquid material into the at least a second system or apparatus via a mixing zone, a nozzle, a retro-fitted port, a retro-fitted nozzle, a velocity steam line, or a live-tap.

For example further processing the devolatilized liquid material by co-injecting a petroleum fraction feedstock and the devolatilized liquid product into the at least a second system or apparatus, wherein the co-injecting comprises co-feeding, independently or separately introducing, injecting, feeding, or co-feeding, the petroleum fraction feedstock and the devolatilized liquid product might be proposed.

It is for example also proposed to further process the devolatilized liquid material by co-injecting a renewable fuel oil and the devolatilized liquid product into the at least a second system or apparatus, wherein the co-injecting comprises co-feeding, independently or separately introducing, injecting, feeding, or co-feeding, the renewable fuel oil and the devolatilized liquid product.

Especially a method of processing, comprising introducing a devolatilized liquid material into a fluidized catalytic cracker (FCC), wherein the devolatilized liquid material is produced by thermally converting biomass, petroleum materials, or both, to form a starting liquid; supplying the starting liquid to a first component; heating the first component to a temperature in the range of 20 °C to 200 °C; obtaining a devolatilized liquid material, wherein the devolatilized liquid material has an elevated flash point temperature and a reduced concentration of volatile components relative to said starting liquid; and obtaining a volatile components product is proposed.

The accompanying drawings, which are included as part of the present specification, illustrate the presently preferred embodiments and, together with the general description given above and the detailed description of the preferred embodiments given below, serve to explain and teach the principles of the present disclosure.
Figure 1 illustrates an exemplary thermal conversion unit to produce primary liquids for use in present methods, according to one embodiment.
Figure 2 illustrates an exemplary wiped film evaporator system for use in present methods, according to one embodiment.
Figure 3 illustrates exemplary falling film evaporator system for use in present methods, according to one embodiment.
Figure 4 illustrates a packed column system that accepts liquid from the thermal conversion unit.

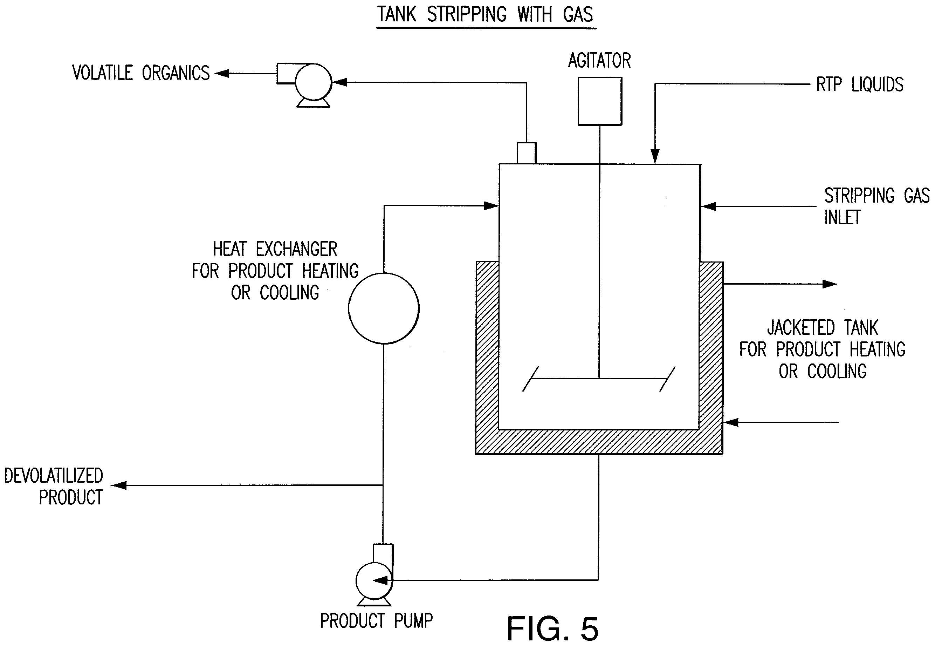

Figure 5 illustrates a method to devolatilize thermally produced liquid in a containment vessel using a stripper system.
Figure 6 illustrates an embodiment of the present disclosure utilizing a conditioning system.

It should be noted that the figures are not necessarily drawn to scale and that elements of similar structures or functions are generally represented by like reference numerals for illustrative purposes throughout the figures. It also should be noted that the figures are only intended to facilitate the description of the various embodiments described herein. The figures do not necessarily describe every aspect of the teachings disclosed herein and do not limit the scope of the claims.

The present disclosure relates to the devolatilization of thermally produced liquids to raise the flash point according to the method of claim 1. More specifically, the present disclosure is directed to methods to effectively and selectively reduce volatile components of liquids produced from the thermal conversion of biomass and petroleum materials, resulting in an increase in the flash point.

The measure of flash point of a liquid is a common gauge of the flammability and is indicated by the maximum temperature at which a material can be stored and handled. If the flash point is too low it causes the liquid to be subject to flashing and possible ignition. Certain properties of materials are not generally affected by variations in the flash point, such as auto-ignition temperature, fuel injection and combustion performance. In many jurisdictions, there is a significant difference in how materials are treated if the flash point is below a certain threshold. This threshold is typically in the range of 55-62 °C as measured by the Pensky-Martens closed cup flash point tester (e.g. ASTM D-93), and as such it is preferable to have the flash point greater than 60 °C.

Biomass, such as wood, wood residues, and agricultural residues, can be converted to useful products, *e.g*., fuels or chemicals, by thermal or catalytic conversion. An example of thermal conversion is pyrolysis where the biomass is converted to a liquid and char, along with a gaseous co-product by the action of heat in essentially the absence of oxygen.

Renewable fuels are fuels produced from renewable resources. Examples include biofuels (*e.g*. vegetable oil used as fuel), ethanol, methanol from biomass, or biodiesel and Hydrogen fuel (when produced with renewable processes), thermo-chemically produced liquids, and catalytically converted biomass to liquids.

The present methods are directed to methods to effectively reduce the volatile components from those liquids produced from the pyrolysis of biomass. One such example is renewable oil that was produced from the rapid thermal conversion of biomass under the conditions of 400 to 600 °C at a processing residence time of less than 10 seconds either with or without the action of a catalyst. An example of a catalyst is ZSM-5 or other FCC catalyst.

The volatile components are typically comprised of low molecular weight aldehydes, ketones, and organic acids.

Various methods and apparatus can be used to effectively reduce the volatile components, such as wiped film evaporator, falling film evaporator, flash column, packed column, and devolatilization vessel or tank. Following processing using the disclosed methods and systems, a liquid product is obtained that meets the threshold requirements of a flash point above 55 - 62 °C as measured by the Pensky-Martens closed cup flash point tester (e.g. ASTM D-93).

The wiped film evaporator has the advantage of good heat and mass transfer, temperature control and short contact times. The liquid that is to be devolatilized typically enters the top of the unit and falls down through a rotating distribution system that will enable an evenly applied film of the liquid on the surface of the evaporator. Wiper blades on the rotating system create the thin film and also serve to move the fluid down the inner walls. The devolatilized vapor that is produced exits the evaporator and can be either disposed or condensed and collected separately. The devolatilized liquid bottoms product flows down the evaporator and through a port where it is immediately cooled if required to ensure minimal deleterious effect to the liquid product.

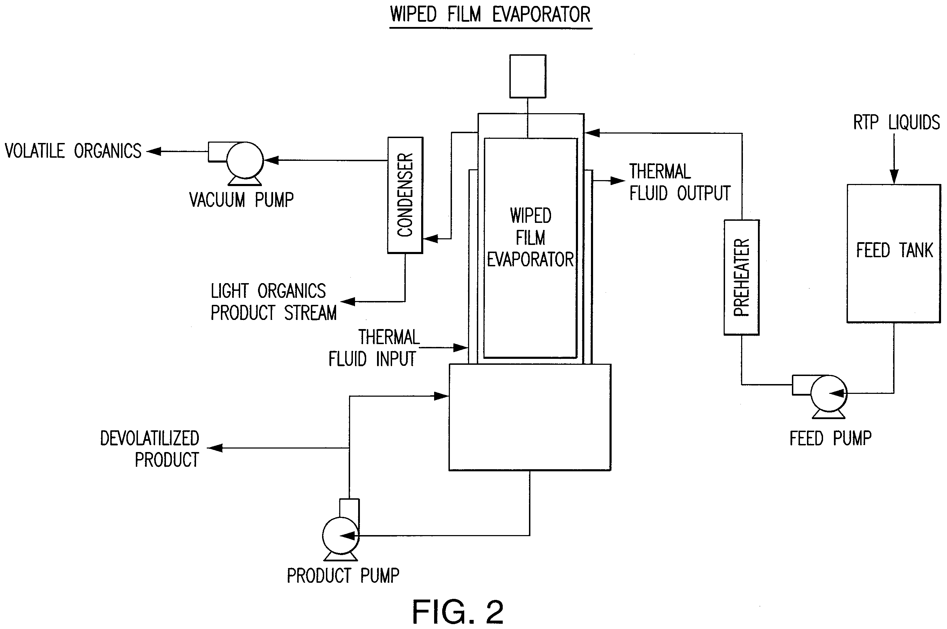

According to one embodiment, the thermally produced liquid or renewable oil is directed to a wiped film evaporator (an example detailed in Figure 2). The short contact time in the unit and precise control of the surface temperatures and system pressure enable an appropriate devolatilization of the liquid while reducing any negative effects to the liquid product. Under appropriate conditions the volatile components can be effectively removed using a wiped film evaporator while minimizing any deleterious thermal effects to the product liquid while additionally raising the flash point temperature above the threshold of 55 - 62 °C. Preferably the flash point temperature is raised above 60 °C. More preferably the flash point temperature is raised above 62 °C. According to one embodiment, the temperature of the wiped film evaporator is adjusted to obtain a liquid film temperature in a range less than 200 °C (e.g., in a range between 20 °C and 200 °C). In a preferred embodiment, the temperature of the wiped film evaporator is adjusted to less than 150 °C (e.g., in a range between 20 and 150 °C), and more preferably in the range less than 100 °C (e.g., in a range between 20 and 100 °C).

According to an alternative embodiment, the thermally produced liquid or renewable fuel is directed to a wiped film evaporator under the influence of a vacuum and the temperature of the wiped film evaporator is adjusted to a range less than 200 °C (e.g., in a range between 20 and 200 °C), and preferably in the range less than 150 °C (e.g., in a range between 20 and 150 °C), and more preferably in the range less than 100 °C (e.g., in a range between 20 and 100 °C).

According to one embodiment the wiped film evaporator is operated under the influence of a vacuum and is adjusted in a range of 10 to 100 mmHg with a thermally produced liquid temperature of 10 to 50 °C.

According to one embodiment the wiped film evaporator is operated under the influence of a vacuum and is adjusted in a range of 100 to 350 mmHg with a thermally produced liquid temperature of 10 to 100 °C.

According to one embodiment the wiped film evaporator is operated under the influence of a vacuum and is adjusted in a range of 10 to 750 mmHg with a thermally produced liquid temperature of 10 to 200 °C.

Another evaporator system that could be used to achieve the devolatilization is employing a falling film evaporator. The liquid which is to be devolatilized is introduced through the top of the unit and as a result of gravity, the liquid flows down the unit, preferably in a continuous film. To increase the surface area, tubes can be used with heat applied to the walls of the tubes to initiate and control the degree of vapor production. Separation of the liquid phase from the vapor phase takes place in the tubes. The amount of vapor produced can positively influence the liquid film by producing a downward velocity that further shortens the liquid residence time and thereby reduces the likelihood of negatively affecting the properties of the product liquid. A vacuum can be applied to the system to enable sufficient devolatilization while minimizing surface temperatures that could otherwise negatively affect the liquid. Under appropriate conditions the volatile components can be effectively removed using a falling film evaporator while minimizing any deleterious thermal effects to the product liquid while additionally raising the flash point temperature above the threshold of 55 - 62 °C. Preferably the flash point temperature is raised above 60 °C. More preferably the flash point temperature is raised above 62 °C.

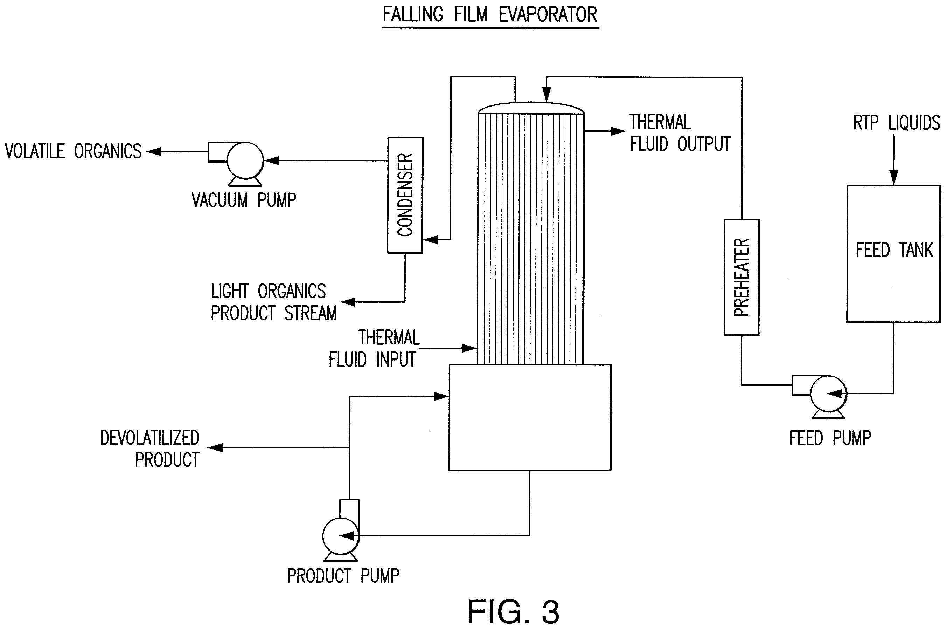

According to one embodiment, the thermally produced liquid or renewable fuel is directed to a falling film evaporator (an example detailed in Figure 3) and the temperature is adjusted to a range less than 200 °C (e.g., in a range between 20 and 200 °C), and preferably in the range less than 150 °C (e.g., in a range between 20 and 150 °C), and more preferably in the range less than 100 °C (e.g., in a range between 20 and 100 °C).

According to one embodiment, the thermally produced liquid or renewable fuel is directed to a falling film evaporator under the influence of a vacuum and the temperature of the falling film evaporator is adjusted to a range less than 200 °C (e.g., in a range between 20 and 200 °C), and preferably in the range less than 150 °C (e.g., in a range between 20 and 150 °C), and more preferably in the range less than 100 °C (e.g., in a range between 20 and 100 °C).

According to one embodiment the falling film evaporator is operated under the influence of a vacuum and is adjusted in a range of 10 to 100 mmHg with a thermally produced liquid temperature of 10 to 50 °C.

According to one embodiment the falling film evaporator is operated under the influence of a vacuum and is adjusted in a range of 100 to 350 mmHg with a thermally produced liquid temperature of 10 to 100 °C.

According to one embodiment the falling film evaporator is operated under the influence of a vacuum and is adjusted in a range of 10 to 750 mmHg with a thermally produced liquid temperature of 10 to 200 °C.

Another system that could be used to achieve devolatilization of the liquid is a packed column. A packed column utilizes a tube, pipe or vessel that contains some form of packing material which enhances heat and mass transfer. The packing material can be randomly placed, or structured packing. The column can be run under the influence of a vacuum. Under appropriate conditions the volatile components can be effectively removed using a packed column while minimizing any deleterious thermal effects to the product liquid while additionally raising the flash point temperature above the threshold of 55 - 62 °C. Preferably the flash point temperature is raised above 60 °C. More preferably the flash point temperature is raised above 62 °C.

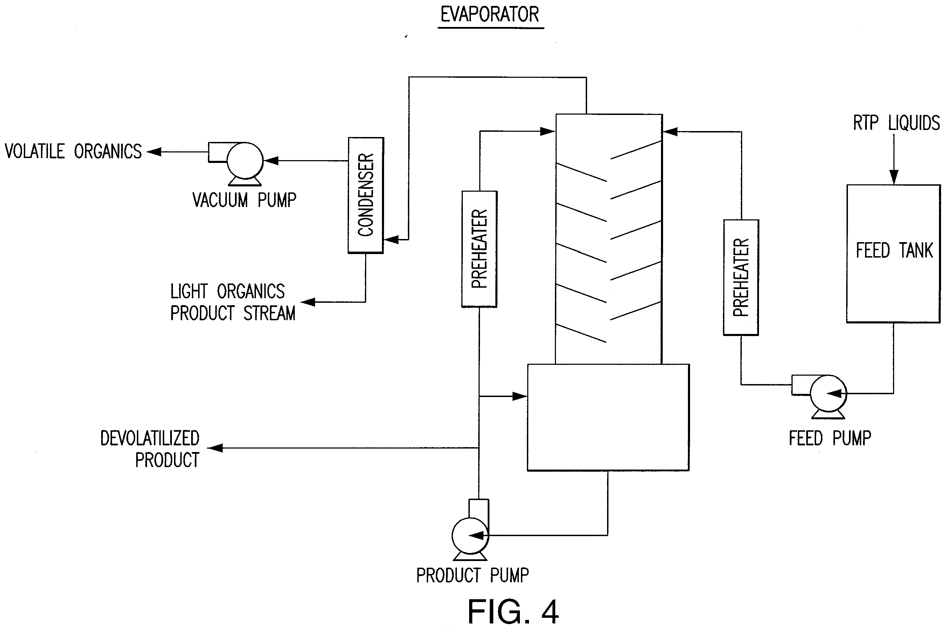

According to one embodiment, the thermally produced liquid or renewable fuel is directed to a packed column (an example is detailed in Figure 4) under the influence of a vacuum and the temperature of the packed column is adjusted to a range less than 200 °C (e.g., in a range between 20 and 200 °C), and preferably in the range less than 150 °C (e.g., in a range between 20 and 150 °C), and more preferably in the range less than 100 °C (e.g., in a range between 20 and 100 °C).

According to one embodiment the packed column is operated under the influence of a vacuum and is adjusted in a range of 10 to 100 mmHg with a thermally produced liquid temperature of 10 to 50 °C.

According to one embodiment the packed column is operated under the influence of a vacuum and is adjusted in a range of 100 to 350 mmHg with a thermally produced liquid temperature of 10 to 100 °C.

According to one embodiment the packed column is operated under the influence of a vacuum and is adjusted in a range of 10 to 750 mmHg with a thermally produced liquid temperature of 10 to 200 °C.

The thermally produced liquid is circulated through the packed column for duration of time such that the flash point temperature of the liquid is raised above about 55 to 62 °C. Preferably the flash point temperature is raised above 60 °C. More preferably the flash point temperature is raised above 62 °C.

According to one embodiment, the thermally produced liquid or renewable fuel is directed to a devolatilization tank or vessel under the influence of a vacuum and the temperature of the devolatilization tank or vessel is adjusted to a range less than 200 °C (e.g., in a range between 20 and 200 °C), and preferably in the range less than 150 °C (e.g., in a range between 20 and 150 °C), and more preferably in the range less than 100 °C (e.g., in a range between 20 and 100 °C).

According to one embodiment, the thermally produced liquid or renewable fuel is directed to a devolatilization tank or vessel under the influence of positive headspace ventilation and the temperature of the devolatilization tank or vessel is adjusted to a range less than 200 °C (e.g., in a range between 20 and 200 °C), and preferably in the range less than 150 °C (e.g., in a range between 20 and 150 °C), and more preferably in the range less than 100 °C (e.g., in a range between 20 and 100 °C).

According to one embodiment the devolatilization tank or vessel is operated under the influence of a vacuum and is adjusted in a range of 10 to 100 mmHg with a thermally produced liquid temperature of 10 to 50 °C. The temperature may be controlled (heated or cooled) through the use of a heat exchanger in the circulation loop and/or a jacket and/or coil in the tank.

According to one embodiment the devolatilization tank or vessel is operated under the influence of a vacuum and is adjusted in a range of 100 to 350 mmHg with a thermally produced liquid temperature of 10 to 100 °C. The temperature may be controlled (heated or cooled) through the use of a heat exchanger in the circulation loop and/or a jacket and/or coil in the tank.

According to one embodiment the devolatilization tank or vessel is operated under the influence of a vacuum and is adjusted in a range of 10 to 750 mmHg with a thermally produced liquid temperature of 10 to 200 °C. The temperature may be controlled (heated or cooled) through the use of a heat exchanger in the circulation loop and/or a jacket and/or coil in the tank.

According to one embodiment the devolatilization tank or vessel is maintained at 10 to 100 °C while having a flow of air or other gas (e.g., nitrogen, synthesis gas, thermally produced by-product gas, etc.) in the head space of the tank above the liquid. The flow of gas is adjusted to allow 0.01 to 2 volume changes per hour and more preferably 1 to 5 volume changes per hour. The temperature may be controlled (heated or cooled) through the use of a heat exchanger in the circulation loop and/or a jacket and/or coil in the tank.

The thermally produced liquid is retained in the devolatilization tank or vessel for duration of time such that the flash point temperature of the liquid is raised above about 55 to 62 °C. Preferably the flash point temperature is raised above 60 °C. More preferably the flash point temperature is raised above 62 °C.

According to one embodiment, the volatile components evolved from the vessel are directed to a flare.

In a further embodiment, the tank or vessel is coupled with an activated carbon filter system on the vent. The activated carbon filter system serves to capture volatile components that are evolved from the tank or vessel during the devolatilization procedure. In an alternative embodiment, the tank or vessel is coupled with a scrubber or filter system on the outlet. The scrubber or filter system serves to capture volatile components that are evolved from the tank or vessel during the devolatilization procedure.

Various methods can also be employed to increase the rate of devolatilization. According to one embodiment, a stripper gas can be used as a method to create bubbling action in the tank or vessel and serve to increase the surface area of contact thereby improving the rate of devolatilization. The stripper gas may be a product gas from the thermal conversion unit, nitrogen, air, or an inert gas. In an alternative or further embodiment, the tank or vessel is equipped with an agitator and/or circulation pump to actively increase the surface area of contact thereby improving the rate of devolatilization.

Suitable liquids prepared from thermal conversion of biomass or petroleum materials may be treated with one or more devolatilitization processes to reduce the amount or concentration of one or more volatile components, wherein the resulting liquid product has an elevated flash point, relative to the flash point of the thermally converted liquid prior to devolatilization, for example, the resulting liquid product may have a flash point that is elevated by at least 1 °C, relative to the flash point of the thermally converted liquid prior to devolatilization, such as elevated by at least 2 °C; at least 3 °C; at least 4 °C; at least 5 °C; at least 6 °C; at least 7 °C; at least 8 °C; at least 9 °C; at least 10 °C; at least 15 °C; at least 20 °C; at least 25 °C; or elevated by at least 30 °C.

In certain embodiments, suitable liquids prepared from thermal conversion of biomass or petroleum materials may be treated with one or more devolatilitization processes to reduce the amount or concentration of one or more volatile components, wherein the resulting liquid product has a flash point that is elevated in the range of between 1 °C to 50 °C, relative to the flash point of the thermally converted liquid prior to devolatilization, for example, the resulting liquid product has a flash point that is elevated in the range of between 1 °C to 5 °C, such as elevated in the range of between 2 °C to 7 °C; between 3 °C to 9 °C; between 4 °C to 10 °C; between 5 °C to 15 °C; between 10 °C to 15 °C; between 10 °C to 20 °C; between 15 °C to 25 °C; or elevated in the range of between 20 °C to 30 °C.

Suitable liquids prepared from thermal conversion of biomass or petroleum materials may be treated with one or more devolatilitization processes to reduce the amount or concentration of one or more volatile components, wherein the resulting liquid product has an elevated flash point, relative to the flash point of the thermally converted liquid prior to devolatilization. For example, the suitable liquids to undergo a devolatilization process may be reiteratively treated by the same process one or more times, such as 2 -3, 3-5, or 4-6 times by the same process to produces a resulting liquid product that has an elevated flash point, relative to the flash point of the thermally converted liquid prior to devolatilization. Alternatively, the suitable liquids to undergo a devolatilization process may be treated by a combination of one or more of the following systems (or component of a system), comprising: a wiped film evaporator; a falling film evaporator; a packed column; a devolatilization tank; an outlet system comprising a filter system, such as a carbon filter system; an outlet system comprising a scrubber system; an agitator system; a circulation pump; a system operated under vacuum, for example, under a vacuum in the range of between 10 to 750 mmHg, such as between 10 to 600 mmHg, between 10 to 500 mmHg, between 10 to 400 mmHg, between 10 to 300 mmHg, between 10 to 200 mmHg, between 10 to 100 mmHg, between 10 to 50 mmHg, between 10 to 25 mmHg, between 25 to 75 mmHg, between 50 to 100 mmHg, between 100 to 750 mmHg, between 100 to 500 mmHg, between 100 to 400 mmHg, between 100 to 350 mmHg, between 100 to 300 mmHg, or between 100 to 200 mmHg.

In certain embodiments, suitable liquids prepared from thermal conversion of biomass or petroleum materials ("pre-devolitization liquids") may have a flash point temperature in the range of between 30 °C to 60 °C, such as a flash point temperature in the range of between 30 °C to 58 °C; between 30 °C to 55 °C; between 30 °C to 50 °C; between 30 °C to 45 °C; between 30 °C to 40 °C; between 35 °C to 60 °C; between 35 °C to 57 °C; between 35 °C to 55 °C; between 35 °C to 50 °C; between 35 °C to 45 °C; between 40 °C to 60 °C; between 40 °C to 58 °C; between 40 °C to 55 °C; between 40 °C to 50 °C; between 40 °C to 45 °C; between 50 °C to 60 °C; between 50 °C to 58 °C; between 50 °C to 55 °C; or a flash point temperature in the range of between 52 °C to 58 °C.

In certain embodiments, a pre-devolitization liquid may be treated with one or more devolatilitization processes and the resulting liquid product may have a flash point temperature in the range of between 40 °C to 90 °C, such as a flash point temperature in the range of between 40 °C to 85 °C; between 40 °C to 80 °C; between 40 °C to 75 °C; between 40 °C to 70 °C; between 40 °C to 65 °C; between 40 °C to 60 °C; between 50 °C to 90 °C; between 50 °C to 80 °C; between 50 °C to 70 °C; between 50 °C to 60 °C; between 55 °C to 90 °C; between 55 °C to 85 °C; between 55 °C to 80 °C; between 55 °C to 75 °C; between 55 °C to 70 °C; between 60 °C to 90 °C; between 60 °C to 85 °C; between 60 °C to 80 °C; between 60 °C to 70 °C; between 65 °C to 90 °C; between 65 °C to 80 °C; between 70 °C to 90 °C; between 70 °C to 85 °C; or a flash point temperature in the range of between 70 °C to 80 °C.

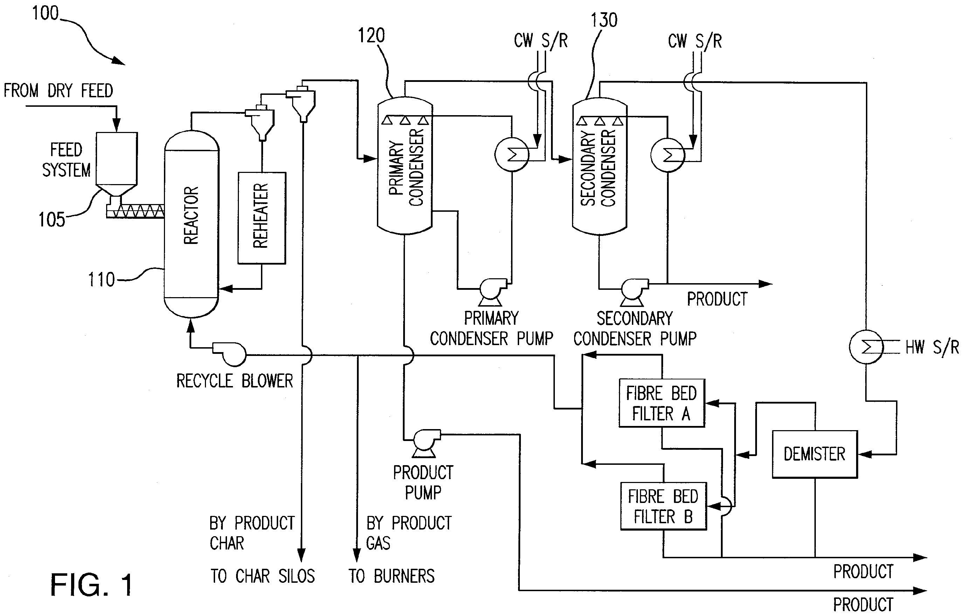

The operating conditions of the thermal conversion system can be adjusted to allow in-situ removal of the volatile components. Figure 1 an example of a thermal conversion system 100. The downstream system is comprised of several unit operations. The system shown in Figure 1 comprises a feed system 105 for supplying the selected feedstock, a reactor 110, a first condensing column 120, and a second condensing column 130. By adjusting the temperature of the first column, volatile components of the produced liquid can be caused to go further downstream to the second column. The liquid remaining in the first column will have a flash point that is above the threshold point of 55-62 °C.

According to one embodiment, the first condensing column of a thermal conversion system is operated to cause the temperature in the column to be greater than 30 °C. In a further embodiment, the first condensing column of the thermal conversion system is operated to cause the temperature in the column to be in a temperature range of 30 °C to 60 °C. In other embodiments, the first condensing column of a thermal conversion system is operated to cause the temperature in the column to be in a temperature range of 30 °C to 50 °C or in the range of 40 °C to 75 °C. According to this embodiment it can be practiced independent to the methods as described above or as a pretreatment method in advance of the methods as described above.

According to one embodiment, the second condensing column of a thermal conversion system is operated to cause the temperature in the column to be at a temperature of greater than 30 °C. More preferably, the second condensing column of a thermal conversion system is operated to cause the temperature in the column to be in a temperature range of 30 °C to 60 °C, or 30 °C to 50 °C, or 40 °C to 75 °C.

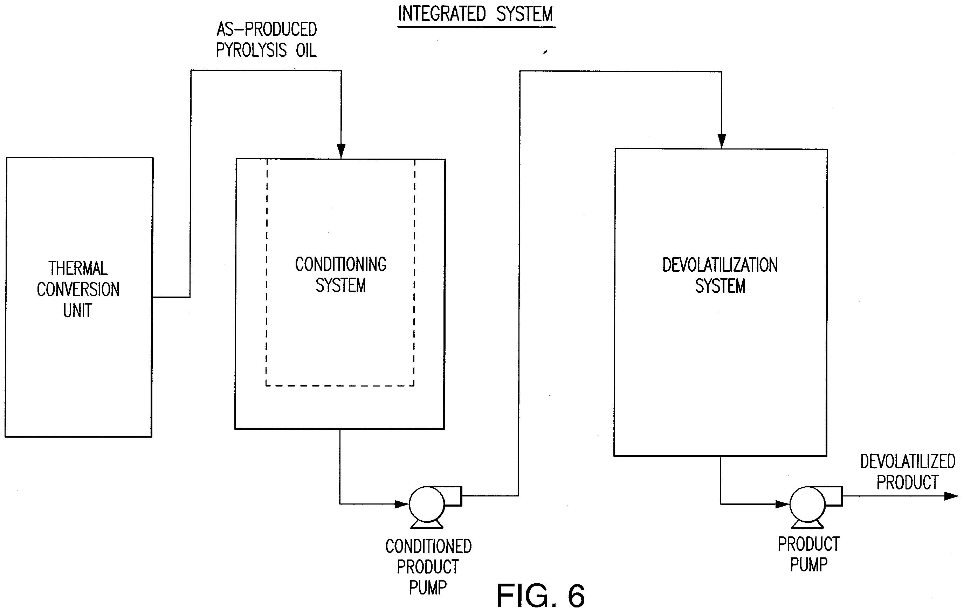

Figure 6 illustrates an example of integrating the downstream of a thermal conversion unit with a system to devolatilize the thermally produced liquid and produce a product that meets the flash point threshold. The devolatilization system can be a wiped film evaporator, falling film evaporator, packed column, devolatilization vessel or tank, or other evaporation system.

According to one embodiment, all of the liquid from the downstream liquid collection system of the thermal conversion unit is directed to a devolatilization system. Alternatively, only the first column liquid from the downstream liquid collection system of the thermal conversion unit is directed to a devolatilization system. In a further alternative, only the second column liquid from the downstream liquid collection system of the thermal conversion unit is directed to a devolatilization system.

Figure 6 illustrates an example of integrating the downstream of a thermal conversion unit with a liquid conditioning system then directing the conditioned liquid to a devolatilization unit whereby the conditioned and devolatilized thermally produced liquid meets the flash point threshold. The conditioning system can be a screen, filter, centrifuge, decanter, or other such separation system. The devolatilization system can be a wiped film evaporator, falling film evaporator, packed column, devolatilization vessel or tank, or other evaporation system.

According to one embodiment, all of the liquid from the downstream liquid collection system of the thermal conversion unit is directed to a conditioning system and the conditioned liquid product is then directed to a devolatilization system whereby the resultant liquid product meets the flash point threshold.

The systems and methods as described above can also serve to reduce the water content of thermally produced liquid. Along with a controlled amount of devolatilized organic chemicals, water can also be removed by operating the above systems under the more severe conditions of deeper vacuum or slightly higher operating temperature.

Fluid catalytic cracking (FCC) is a conversion process used in petroleum refineries, and is widely used to convert the high-boiling, high-molecular weight hydrocarbon fractions of petroleum crude oils to more valuable gasoline, olefinic gases, and other products. For example, catalytic cracking produces more gasoline with a higher octane rating, and also produces byproduct gases that are more olefinic, and hence more valuable, than those produced by thermal cracking.

The feedstock to an FCC is usually that portion of the crude oil that has an initial boiling point of 340°C or higher at atmospheric pressure and an average molecular weight ranging from about 200 to 600 or higher. This portion of crude oil is often referred to as heavy gas oil. The FCC process vaporizes and breaks the long-chain molecules of the high-boiling hydrocarbon liquids into much shorter molecules by contacting the feedstock, at high temperature and moderate pressure, with a fluidized powdered catalyst.

In certain embodiments, the liquid product that results from the devolatization processes discussed herein, may be introduced into another system or apparatus for further processing. For example, in certain embodiments, the liquid product that results from the devolatization processes discussed herein, may be introduced into a refinery system, such as a fluidized catalytic cracker (FCC), a FCC refinery system, a coker, a coking unit, a field upgrader unit, a hydrotreater, a hydrotreatment unit, a hydrocracker, a hydrocracking unit, or a desulfurization unit. For example, the system or apparatus is or comprises a FCC refinery system; the system or apparatus is or comprises a coker; the system or apparatus is or comprises a hydrotreater; or the system or apparatus is or comprises a hydrocracker. In certain embodiments, the system or apparatus employed to further process the devolatilized liquid may include a retro-fitted refinery system.

In certain embodiments, the liquid product that results from the devolatization processes discussed herein, may be further processed by a method that includes introducing, injecting, feeding, or co-feeding, the devolatilized liquid product into a refinery system via a mixing zone, a nozzle, a retro-fitted port, a retro-fitted nozzle, a velocity steam line, or a live-tap. For example, the method may comprise processing a petroleum fraction feedstock with the devolatilized liquid product, or may comprise processing a renewable fuel oil with the devolatilized liquid product.

In certain embodiments, the processing may comprise co-injecting the petroleum fraction feedstock and the devolatilized liquid product, such as co-feeding, independently or separately introducing, injecting, feeding, or co-feeding, the petroleum fraction feedstock and the devolatilized liquid product into a refinery system. For example, the petroleum fraction feedstock and the devolatilized liquid product may be provided, introduced, injected, fed, or co-fed proximate to each other into the reactor, reaction zone, reaction riser of the refinery system. In certain embodiments, the devolatilized liquid product is provided, introduced, injected, fed, co-fed into the reactor, reaction zone, or reaction riser of the refinery system proximate, upstream, or downstream to the delivery or injection point of the petroleum fraction feedstock. In certain embodiments, the petroleum fraction feedstock and the devolatilized liquid product come in contact with each other upon introduction, delivery, injection, feeding, co-feeding into the refinery system, into the reactor, into the reaction zone, or into the reaction riser. In certain embodiments, the petroleum fraction feedstock and the devolatilized liquid product come in contact with each other subsequent to entering the refinery system, the reactor, the reaction zone, or the reaction riser. In certain embodiments, the petroleum fraction feedstock and the devolatilized liquid product make first contact with each other subsequent to entering into, introduction into, injection into, feeding into, or co-feeding into the refinery system, the reactor, the reaction zone, or the reaction riser. In certain embodiments, the petroleum fraction feedstock and the devolatilized liquid product are co-blended prior to injection into the refinery system.

In certain embodiments, the processing may comprise co-injecting the renewable fuel oil and the devolatilized liquid product, such as co-feeding, independently or separately introducing, injecting, feeding, or co-feeding, the renewable fuel oil and the devolatilized liquid product into a refinery system. For example, the renewable fuel oil and the devolatilized liquid product may be provided, introduced, injected, fed, or co-fed proximate to each other into the reactor, reaction zone, reaction riser of the refinery system. In certain embodiments, the devolatilized liquid product is provided, introduced, injected, fed, co-fed into the reactor, reaction zone, or reaction riser of the refinery system proximate, upstream, or downstream to the delivery or injection point of the renewable fuel oil. In certain embodiments, the renewable fuel oil and the devolatilized liquid product come in contact with each other upon introduction, delivery, injection, feeding, co-feeding into the refinery system, into the reactor, into the reaction zone, or into the reaction riser. In certain embodiments, the renewable fuel oil and the devolatilized liquid product come in contact with each other subsequent to entering the refinery system, the reactor, the reaction zone, or the reaction riser. In certain embodiments, the renewable fuel oil and the devolatilized liquid product make first contact with each other subsequent to entering into, introduction into, injection into, feeding into, or co-feeding into the refinery system, the reactor, the reaction zone, or the reaction riser. In certain embodiments, the renewable fuel oil and the devolatilized liquid product are co-blended prior to injection into the refinery system.

In one exemplary embodiment of the present disclosure, a thermally produced liquid from the conversion of a wood based feedstock had an initial flash point of 55.5 °C. The requirement threshold for the application was greater than 60 °C. Using a ventilated tank with continuous agitation the liquid was devolatilized to the point where a flash point of 64.7 °C was achieved:

| Sample Date: | Flash Point (°C) |
|---|---|
| Day 1 | 55.5 |
| Day 4 | 61.6 |
| Day 7 | 64.5 |
| Day 14 | 64.7 |

In the description above, for purposes of explanation only, specific nomenclature is set forth to provide a thorough understanding of the present disclosure. However, it will be apparent to one skilled in the art that these specific details are not required to practice the teachings of the present disclosure.

Moreover, the various features of the representative examples and the dependent claims may be combined in ways that are not specifically and explicitly enumerated in order to provide additional useful embodiments of the present teachings. It is also expressly noted that all value ranges or indications of groups of entities disclose every possible intermediate value or intermediate entity for the purpose of original disclosure, as well as for the purpose of restricting the claimed subject matter. It is also expressly noted that the dimensions and the shapes of the components shown in the figures are designed to help to understand how the present teachings are practiced, but not intended to limit the dimensions and the shapes shown in the examples.

Systems and methods for the devolatilization of thermally produced liquids to raise the flash point have been disclosed. It is understood that the embodiments described herein are for the purpose of elucidation and should not be considered limiting the subject matter of the disclosure. Various modifications, uses, substitutions, combinations, improvements, methods of productions would be evident to a person skilled in the art.

## Claims

1. A method of processing a petroleum fraction feedstock and a devolatilized liquid product in a refinery system, wherein the petroleum fraction feedstock and the devolatilized liquid product are co-injected into the refinery system, the method comprising:
i) supplying a starting liquid formed by pyrolysis of a biomass and having a flash point as measured by the ASTM D-93 test in a Pensky-Martens closed cup flash point tester below a first threshold in the range of 55-62°C to a first component;
ii) heating the first component to a temperature in the range of 20 °C to 200 °C;
iii) obtaining a processed liquid product, wherein the processed liquid has an increased flash point above the first threshold and a reduced concentration of volatile components as compared to the starting liquid;
iv) obtaining a volatile components product; and
v) processing the processed liquid with the petroleum fraction feedstock in the refinery system.

2. The method of claim 1, wherein the first component is a wiped film evaporator, a falling film evaporator, a packed column or a devolatilization tank or the first component comprises an outlet, wherein the outlet includes a carbon filter system, includes a scrubber or includes a filter system or the first component comprises an agitator, wherein the agitator is configured to improve the rate of devolatilization, or comprises a circulation pump, wherein the circulation pump is configured to improve the rate of devolatilization.

3. The method of claim 1, wherein heating comprises heating the first component to a temperature in the range of 20 °C to 150 °C or to a temperature in the range of 20 °C to 100 °C.

4. The method of claim 1, further comprising introducing a stripper gas into the first component, wherein preferably the stripper gas comprises one or more of nitrogen, air, inert gas, and the product gas obtained during the pyrolysis of the biomass.

5. The method of claim 1, wherein the first component is operated under the influence of a vacuum, wherein especially the first component is adjusted in a range of 10 to 100 mmHg with a product temperature of 10 to 50 °C, is adjusted in a range of 100 to 350 mmHg with a product temperature of 10 to 100 °C, or is adjusted in a range of 10 to 750 mmHg with a product temperature of 10 to 200 °C.

6. The method of claim 1, wherein the flash point of the devolatilized, processed liquid is elevated in the range of between 1 °C to 50 °C, relative to the flash point of the starting liquid formed by pyrolysis of a biomass prior to devolatilization, or is elevated by at least 5 °C, relative to the flash point of the starting liquid formed by pyrolysis of a biomass prior to devolatilization.

7. The method of claim 1, wherein the flash point of the starting liquid formed by pyrolysis of a biomass prior to devolatilization comprises a flash point temperature in the range of between 30 °C to 60 °C, wherein preferably the flash point of the devolatilized, processed liquid comprises a flash point temperature in the range of between 40 °C to 90 °C.

8. The method of claim 1, wherein the flash point is raised above 62° C as measured by the Pensky-Martens closed cup flash point test.

9. The method of claim 1, wherein the first threshold is 60°C.

## Patentansprüche

1. Verfahren zur Verarbeitung eines Erdölfraktions-Rohstoffs und eines entgasten flüssigen Produkts in einem Raffineriesystem, wobei der Erdölfraktions-Rohstoff und das entgaste flüssige Produkt gemeinsam in das Raffineriesystem eingespritzt werden, wobei das Verfahren umfasst:
i) Zuführen einer Ausgangsflüssigkeit, die durch Pyrolyse einer Biomasse gebildet worden ist, und einen Flammpunkt, wie gemessen durch den ASTM D-93-Test in einem Pensky-Martens-Flammpunkttester mit geschlossenem Tiegel, unter einem ersten Schwellenwert in dem Bereich von 55-62°C aufweist, zu einer ersten Komponente;
ii) Erhitzen der ersten Komponente auf eine Temperatur in dem Bereich von 20°C bis 200°C;
iii) Gewinnen eines verarbeiteten flüssigen Produkts, wobei die verarbeitete Flüssigkeit einen oberhalb des ersten Schwellenwerts erhöhten Flammpunkt und eine verminderte Konzentration von flüchtigen Komponenten, wenn mit der Ausgangsflüssigkeit verglichen, aufweist;
iv) Gewinnen eines Produkts von flüchtigen Komponenten; und
v) Verarbeiten der verarbeiteten Flüssigkeit mit dem Erdölfraktions-Rohstoff in dem Raffineriesystem.

2. Verfahren nach Anspruch 1, wobei die erste Komponente ein Dünnschichtverdampfer, ein Fallstromverdampfer, eine gepackte Kolonne oder ein Entgasungsbehälter ist oder die erste Komponente einen Auslass umfasst, wobei der Auslass ein Kohlefiltersystem enthält, einen Wäscher enthält oder ein Filtersystem enthält oder die erste Komponente einen Mischer umfasst, wobei der Mischer ausgelegt ist zum Verbessern der Entgasungsrate, oder eine Umwälzpumpe umfasst, wobei die Umwälzpumpe zum Verbessern der Entgasungsrate ausgelegt ist.

3. Verfahren nach Anspruch 1, wobei das Erhitzen ein Erhitzen der ersten Komponente auf eine Temperatur in dem Bereich von 20°C bis 150°C oder auf eine Temperatur in dem Bereich von 20°C bis 100°C umfasst.

4. Verfahren nach Anspruch 1, weiterhin umfassend Einführen eines Abstreifgases in die erste Komponente, wobei das Abstreifgas vorzugsweise einen oder mehrere von Stickstoff, Luft, Inertgas umfasst und das Produktgas während der Pyrolyse der Biomasse erhalten wird.

5. Verfahren nach Anspruch 1, wobei die erste Komponente unter dem Einfluss von Vakuum betrieben wird, wobei insbesondere die erste Komponente in einem Bereich von 10 bis 100 mmHg mit einer Produkttemperatur von 10 bis 50°C eingestellt wird, in einem Bereich von 100 bis 350 mmHg mit einer Produkttemperatur von 10 bis 100°C eingestellt wird oder in einem Bereich von 10 bis 750 mmHg mit einer Produkttemperatur von 10 bis 200°C eingestellt wird.

6. Verfahren nach Anspruch 1, wobei der Flammpunkt der entgasten, verarbeiteten Flüssigkeit in dem Bereich von zwischen 1°C bis 50°C erhöht wird, relativ zu dem Flammpunkt der durch Pyrolyse einer Biomasse gebildeten Ausgangsflüssigkeit vor der Entgasung oder um mindestens 5°C erhöht wird, relativ zu dem Flammpunkt der durch Pyrolyse einer Biomasse gebildeten Ausgangsflüssigkeit vor der Entgasung.

7. Verfahren nach Anspruch 1, wobei der Flammpunkt der durch Pyrolyse einer Biomasse gebildeten Ausgangsflüssigkeit vor der Entgasung eine Flammpunkt-Temperatur in dem Bereich von zwischen 30°C bis 60°C umfasst, wobei der Flammpunkt der entgasten, verarbeiteten Flüssigkeit vorzugsweise eine Flammpunkt-Temperatur in dem Bereich von zwischen 40°C bis 90°C umfasst.

8. Verfahren nach Anspruch 1, wobei der Flammpunkt über 62°C erhöht wird, wenn durch den Pensky-Martens-Flammpunkttest mit geschlossenem Tiegel gemessen.

9. Verfahren nach Anspruch 1, wobei der erste Schwellenwert 60°C ist.

## Revendications

1. Procédé de traitement d'une charge de fraction de pétrole et d'un produit liquide dévolatilisé dans un système de raffinerie, dans lequel la charge de fraction de pétrole et le produit liquide dévolatilisé sont co-injectés dans le système de raffinerie, le procédé comprenant :
i) la fourniture d'un liquide de départ formé par pyrolyse d'une biomasse et ayant un point d'éclair tel que mesuré par le test ASTM D-93 dans un testeur de point d'éclair Pensky-Martens à coupe fermée en-dessous d'un premier seuil dans la plage de 55 à 62 °C à un premier composant ;
ii) le chauffage du premier composant à une température dans la plage de 20 °C à 200 °C ;
iii) l'obtention d'un produit liquide traité, dans lequel le liquide traité a un point d'éclair plus élevé supérieur au premier seuil et une concentration réduite en composants volatils comparé au liquide de départ ;
iv) l'obtention d'un produit contenant des composants volatils ; et
v) le traitement du liquide traité avec la charge de fraction de pétrole dans le système de raffinerie.

2. Procédé selon la revendication 1, dans lequel le premier composant est un évaporateur à film raclé, un évaporateur à film tombant, une colonne garnie ou une cuve de dévolatilisation ou le premier composant comprend une sortie, dans lequel la sortie comporte un système de filtre à charbon, comporte un racloir ou comporte un système de filtre ou le premier composant comprend un agitateur, dans lequel l'agitateur est conçu pour améliorer le taux de dévolatilisation, ou comprend une pompe de circulation, dans lequel la pompe de circulation est conçue pour améliorer le taux de dévolatilisation.

3. Procédé selon la revendication 1, dans lequel le chauffage comprend le chauffage du premier composant à une température dans la plage de 20 °C à 150 °C ou à une température dans la plage de 20 °C à 100 °C.

4. Procédé selon la revendication 1, comprenant en outre l'introduction d'un gaz de rectificateur dans le premier composant, dans lequel de préférence le gaz de rectificateur comprend un ou plusieurs de l'azote, de l'air, d'un gaz inerte, et du produit gazeux obtenu durant la pyrolyse de la biomasse.

5. Procédé selon la revendication 1, dans lequel le premier composant fonctionne sous l'influence d'un vide, dans lequel notamment le premier composant est ajusté dans une plage de 10 à 100 mmHg avec une température de produit de 10 à 50 °C, est ajusté dans une plage de 100 à 350 mmHg avec une température de produit de 10 à 100 °C, ou est ajusté dans une plage de 10 à 750 mmHg avec une température de produit de 10 à 200 °C.

6. Procédé selon la revendication 1, dans lequel le point d'éclair du liquide traité dévolatilisé est élevé dans la plage de 1 °C à 50 °C par rapport au point d'éclair du liquide de départ formé par pyrolyse d'une biomasse avant la dévolatilisation, ou est élevé d'au moins 5 °C, par rapport au point d'éclair du liquide de départ formé par pyrolyse d'une biomasse avant la dévolatilisation.

7. Procédé selon la revendication 1, dans lequel le point d'éclair du liquide de départ formé par pyrolyse d'une biomasse avant la dévolatilisation comprend une température de point d'éclair dans la plage de 30 °C à 60 °C, dans lequel de préférence le point d'éclair du liquide traité dévolatilisé comprend une température de point d'éclair dans la plage de 40 °C à 90 °C.

8. Procédé selon la revendication 1, dans lequel le point d'éclair est augmenté à plus de 62 °C tel que mesuré par le testeur de point d'éclair Pensky-Martens à coupe fermée.

9. Procédé selon la revendication 1, dans lequel le premier seuil est de 60 °C.
